# EUROPÄISCHE PATENTSCHRIFT

(11) **EP 1 312 572 B1**
(45) Veröffentlichungstag und Bekanntmachung des Hinweises auf die Patenterteilung: **24.03.2004**
(21) Anmeldenummer: 01128466.8
(22) Anmeldetag: 06.12.2001
(51) Int. Cl.: B66B 1/04

(54) **Hydraulischer Aufzug mit einem Druckspeicher sowie Verfahren zur Steuerung und Regelung eines solchen Aufzugs**
Hydraulic elevator with pressure accumulator and control and regulation method for such an elevator
Ascenseur hydraulique avec accumulateur de pression et méthode de contrôle et régulation pour un tel ascenseur

(30) Priorität: 16.11.2001 CH 21072001
(43) Veröffentlichungstag der Anmeldung: 21.05.2003
(73) Patentinhaber: Bucher Hydraulics AG, 6345 Neuheim/Zug (CH)
(72) Erfinder: Birbaumer, Hugo, 6345 Neuheim (CH); von Holzen, Richard, 6313 Menzingen (CH)
(74) Vertreter: Müller, Frank Peter, Dipl.-Ing.

(56) Entgegenhaltungen:
- DE-A- 3 736 769
- DE-A- 4 034 666
- FR-A- 2 773 142
- PATENT ABSTRACTS OF JAPAN vol. 017, no. 177 (M-1393), 6. April 1993 (1993-04-06) & JP 04 333484 A (HITACHI LTD), 20. November 1992 (1992-11-20)

## Beschreibung

Die Erfindung bezieht sich auf einen hydraulischen Aufzug der im Oberbegriff des Anspruchs 1 genannten Art sowie auf ein Verfahren zur Steuerung und Regelung eines solchen Aufzugs gemäß dem Oberbegriff des Anspruchs 10.

Ein hydraulischer Aufzug der im Oberbegriff des Anspruchs 1 genannten Art ist aus der DE-A1-40 34 666 bekannt. Zwischen dem hydraulischen Antrieb für die Aufzugskabine und dem in dieser Schrift Ausgleichsaufzug genannten Druckspeicher wird mittels einer Pumpe Hydrauliköl gefördert. In den Leitungen von der Pumpe zum Antrieb und von der Pumpe zum Druckspeicher ist je ein Geschwindigkeits-Einstellventil angeordnet, mit denen die Fahrkurve gesteuert werden kann. Offenbart ist weiter, daß die Pumpe von einem elektrischen Motor angetrieben wird, der von einem Inverter angesteuert wird.

In EP-A1-829 445 ist eine Vorrichtung gezeigt, bei der unter bestimmten Bedingungen der mit der Pumpe gekoppelte Motor als Generator wirkt, so daß überschüssige hydraulischer Energie in elektrische Energie umgewandelt, also zurückgewonnen werden kann.

Aus US-A-5,281,774 ist eine Steuereinrichtung für einen hydraulischen Aufzug bekannt, bei der der die Pumpe antreibende elektrische Motor mit einem Inverter gesteuert wird.

Ein hydraulischer Aufzug mit einem Druckspeicher ist auch aus US-A-5,579,868 bekannt. Bei diesem Aufzug ist bei einer der Ausgestaltungen zwischen den hydraulischen Antrieb für den Aufzug und den Druckspeicher eine erste Pumpe geschaltet, mit der der Fluß des Hydrauliköls zwischen dem hydraulischen Antrieb und dem Druckspeicher beeinflußbar wird. Mit der ersten Pumpe ist ein Hydromotor gekoppelt, durch den ein regelbarer Teilstrom des Hydrauliköls zum Tank fließt, wobei aus der Druckdifferenz beim Entspannen des Hydrauliköls vom hydraulischen Antrieb bzw. Druckspeicher zum drucklosen Tank Energie gewonnen wird, die beim Betrieb der ersten Pumpe ausgenutzt wird. Mittels einer zweiten Pumpe ist Hydrauliköl vom Tank zum Druckspeicher förderbar, um den Druckspeicher immer wieder aufzuladen.

Aus WO 98/34868 ist es bekannt, die Pumpe zum Fördern von Hydrauliköl bei einem hydraulischen Aufzug durch einen elektronischen Leistungssteller zu betreiben. Solche Leistungssteller sind unter dem Begriff Frequenzumrichter bekannt.

Aus WO 99/33740 ist eine weitere Vorrichtung zum Betrieb eines hydraulischen Aufzugs bekannt. Hier sind zwischen dem hydraulischen Antrieb und dem Druckspeicher eine Pumpe und vier Leitungszweige mit je einem elektrisch ansteuerbaren Ventil angeordnet. Bei Aufwärtsfahrt müssen zwei der Ventile geöffnet werden und bei Abwärtsfahrt zwei andere Ventile. Der Druckspeicher weist offenbar drei Druckräume auf, was aus der die Priorität begründenden Anmeldung FR-A-2 773 141 deutlicher ersichtlich wird. Unklar bleibt, wie die Geschwindigkeit geregelt wird. Es ist anzunehmen, daß beim Schalten der vier elektrisch steuerbaren Ventile erhebliche Druckstöße auftreten.

Der Erfindung liegt die Aufgabe zugrunde, die hydraulische Schaltung zu vereinfachen und den Bedarf an elektrischer Energie, insbesondere den Spitzenbedarf, also die elektrische Anschlußleistung, zu senken, sowie ein Steuer- und Regelverfahren anzugeben, das einen energiesparenden und gleichzeitig komfortablen Betrieb eines solchen Aufzugs ermöglicht.

Die genannte Aufgabe wird erfindungsgemäß durch die Merkmale der Ansprüche 1 bzw. 10 gelöst. Vorteilhafte Ausgestaltungen ergeben sich aus den abhängigen Ansprüchen.

Nachfolgend werden Ausführungsbeispiele der Erfindung anhand der Zeichnung näher erläutert.

Es zeigen:
- Fig. 1: ein Schema eines hydraulischen Aufzugs,
- Fig. 2: ein Druckverlaufsdiagramm,
- Fig. 3: ein in vorteilhafter Weise ergänztes hydraulisches Schema,
- Fig. 4a bis 4c: alternative Ausgestaltungen eines Zylinderleitungs-Absperrventils,
- Fig. 5a und 5b: alternative Ausgestaltungen eines Speicherleitungs-Absperrventils,
- Fig. 6: ein weiteres hydraulisches Schema,
- Fig. 7: eine vorteilhaftes weiteres hydraulisches Schema und
- Fig. 8: eine weitere Variante.

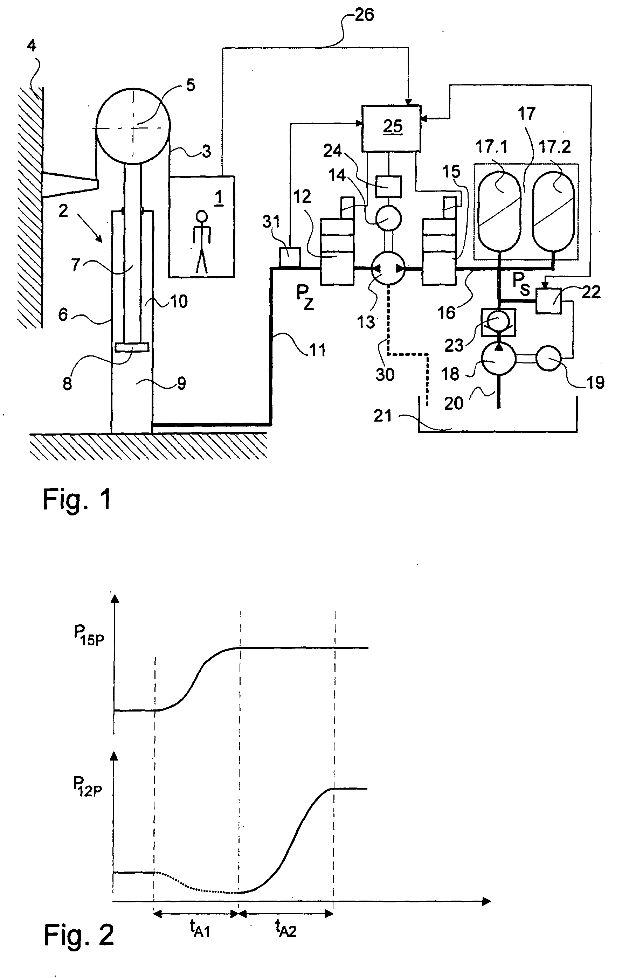

In der Fig. 1 ist mit der Bezugszahl 1 eine Aufzugskabine bezeichnet, die von einem hydraulischen Antrieb 2 bewegbar ist. Die Kraftübertragung vom hydraulischen Antrieb 2 auf die Kabine 1 erfolgt in bekannter Weise mittels eines Seiles 3, das über eine am hydraulischen Antrieb 2 befestigte Rolle 5 umgelenkt wird. Das eine Ende des Seiles 3 ist an einem Gebäudeteil 4 befestigt, kann aber auch an den nicht dargestellten Führungsschienen für die Aufzugskabine 1 befestigt sein. Bekannte abweichende Anordnungen von Seil 3 und Rollen 5 sind im Rahmen der Erfindung möglich. Diesbezüglich zeigt die Fig. 1 lediglich ein Beispiel. Auch der direkte Antrieb der Kabine 1 durch den hydraulischen Antrieb, wie in WO/34868 gezeigt, ist möglich.

Der hydraulische Antrieb 2 besteht aus einem Zylinder 6, in dem ein an einer Kolbenstange 7 befestigter Kolben 8 bewegbar ist. Das dem Kolben 8 gegenüber liegende Ende der Kolbenstange 7 trägt die Rolle 5. Der Innenraum des Zylinders 6 wird durch den Kolben 8 unterteilt in einen ersten Druckraum 9 und einen zweiten Druckraum 10. Der Antrieb 2 des dargestellten Ausführungsbeispiels ist ein sogenannter Plungerzylinder, bei dem die beiden Druckräume 9 und 10 verbunden sind. Am Kolben 8 ist also keine Dichtung gegen die Innenwand des Zylinders 6 vorhanden. An der Stelle, wo die Kolbenstange 7 aus dem hydraulischen Antrieb 2 heraustritt, befindet sich eine Dichtung, so daß der Druckraum 10 abgedichtet ist. Bei dieser Zylinderbauart entspricht der hydraulisch wirksame Querschnitt dem Querschnitt der Kolbenstange 7.

An den ersten Druckraum 9 ist eine Zylinderleitung 11 angeschlossen, die diesen Druckraum 9 mit einem Zylinderleitungs-Absperrventil 12 verbindet. Dieses Zylinderleitungs-Absperrventil 12 ist ein elektrisch ansteuerbares AUF-ZU-Ventil, also beispielsweise ein Magnetventil. Das Zylinderleitungs-Absperrventil 12 ist andererseits mit einer Pumpe 13 verbunden, die von einem elektrischen Motor 14 angetrieben wird. Am anderen Anschluß der Pumpe 13 ist ein Speicherleitungs-Absperrventil 15 angeschlossen, das ebenfalls ein elektrisch ansteuerbares AUF-ZU-Ventil ist. An dieses Speicherleitungs-Absperrventil 15 schließt sich eine Speicherleitung 16 an, die zu einem Druckspeicher 17 führt, der aus mindestens einem Druckspeicher 17.1 besteht. Dargestellt ist ein weiterer Druckspeicher 17.2, der parallel zum ersten Druckspeicher 17.1 angeschlossen ist. Die Zahl der im Druckspeicher 17 enthaltenen Druckspeicher 17.1, 17.2, 17.n richtet sich in vorteilhafter Weise beispielsweise nach dem benötigten Speichervolumen, das mit dem von der Kabine 1 zurückzulegenden maximalen Weg zusammenhängt. Je größer der maximal mögliche Weg ist, desto mehr Druckspeicher 17.1, 17.2, 17.n sind im Druckspeicher 17 enthalten. Als Druckspeicher 17 kommen sowohl Blasenspeicher als auch Kolbenspeicher in Betracht.

Ein Zweig der Speicherleitung 16 führt zu einer Ladepumpe 18, die vom einem Elektromotor 19 angetrieben wird. Die Ladepumpe 18 ist außerdem über eine Tankleitung 20 mit einem Tank 21 verbunden. Mittels der Ladepumpe 18 ist Hydrauliköl vom Tank 21 in den Druckspeicher 17 förderbar. Vorteilhaft wird der die Ladepumpe 18 antreibende Elektromotor 19 durch einen Druckschalter 22 automatisch gesteuert. Der Druckschalter 22 liegt an der Speicherleitung 16 an, erfaßt also deren Druck, der mit P_{S} bezeichnet ist. Sinkt der Druck P_{S} unter einen vorgegebenen unteren Wert, so schaltet der Druckschalter 22 den Elektromotor 19 ein, so daß dann die Ladepumpe 18 Hydrauliköl vom Tank 21 in den Druckspeicher 17 fördert, wodurch der Druck P_{S} so lange erhöht wird, bis der Druck P_{S} einen vorgegebenen oberen Wert erreicht, wonach dann die Ladepumpe 18 wieder ausgeschaltet wird. Die Ladepumpe 18 muß also nur dann laufen, wenn der Druck P_{S} im Druckspeicher 17 zu klein ist. Der Druck P_{S} kann einerseits wegen unvermeidlicher Leckverluste über die Ladepumpe 18 absinken, andererseits durch Absinken der Temperatur des Hydrauliköls durch Umgebungseinflüsse. Steigt durch solche Umgebungseinflüsse die Temperatur des Hydrauliköls an, so steigt der Druck P_{S} an. Da ein solcher Temperaturanstieg nie sehr schnell geschieht, wäre es aus diesem Grund nicht zwingend, zwischen dem Druckspeicher 17 und dem Tank 21 ein Überdruckventil vorzusehen, durch das Hydrauliköl bei steigendem Druck P_{S} in den Tank 20 abgelassen werden kann. Die Leckageverluste der Ladepumpe 18 reichen an sich aus, um den Druck P_{S} nicht zu stark ansteigen zu lassen. Gleichwohl kann aus Sicherheitsgründen ein solches Überdruckventil vorhanden sein, was später auch noch gezeigt wird. Vorteilhaft ist zwischen Ladepumpe 18 und Druckspeicher 17 ein Rückschlagventil 23 angeordnet. Durch dieses Rückschlagventil 23 wird ein Leckageverlust durch die Ladepumpe 18 verhindert. Dann ist das schon erwähnte Überdruckventil auf jeden Fall nötig. Nicht gezeichnet und beschrieben sind weitere sicherheitsrelevante Anlagenteile wie Rohrbruchsicherung und Notablaß, weil solche Elemente nicht relevant im Hinblick auf das Wesen der Erfindung sind.

Der Druckspeicher 17 ist, wie schon zuvor erwähnt, ein Blasen- oder ein Kolbenspeicher. Dessen Druck P_{S} ändert sich in Abhängigkeit von der Bewegung der Kabine 1. Für die Steuerung bzw. Regelung von Weg und Geschwindigkeit der Kabine 1 wirkt sich dies aber nicht nachteilig aus. Bei der Regelung von Weg und Geschwindigkeit der Kabine 1 wird in bekannter Weise beispielsweise das Signal eines in der Zylinderleitung 11 plazierten, hier nicht dargestellten Durchflußmessers berücksichtigt. Sie kann aber auch mittels eines Meßwertgebers für die Drehzahl des Motors 14 oder die Geschwindigkeit der Kabine 1 erfolgen.

Die vorgegebenen Werte, bei denen der Druckschalter 22 den Elektromotor 19 ein- bzw. ausschaltet, können vorteilhaft durch ein Steuer- und Regelgerät 25 veränderbar sein.

In der Zylinderleitung 11 herrscht ein Druck P_{Z}, der dem Druck im ersten Druckraum 9 des hydraulischen Antriebs 2 entspricht. Dieser Druck korreliert mit der Last der Kabine 1.

Weil erfindungsgemäß die Pumpe 13 zwischen der Zylinderleitung 11 und der Speicherleitung 16 angeordnet ist, wirkt dann, wenn sich beim Betrieb des Aufzugs das Zylinderleitungs-Absperrventil 12 in der Stellung "AUF" befindet, auf die Pumpe 13 einerseits unmittelbar der Druck P_{Z} in der Zylinderleitung 11 und somit im hydraulischen Antrieb 2 und, wenn sich beim Betrieb des Aufzugs auch das Speicherleitungs-Absperrventil 15 in der Stellung "AUF" befindet, andererseits unmittelbar der Druck P_{S} in der Speicherleitung 16 und somit im Druckspeicher 17. Gegenüber dem vorbekannten Stand der Technik sind also Einstellventile zur Regelung der Geschwindigkeit nicht erforderlich. Die hydraulische Schaltung ist also gegenüber diesem Stand der Technik vereinfacht. Die zum Betrieb der Pumpe 13 nötige elektrische Antriebsenergie für den die Pumpe 13 antreibenden Motor 14 korreliert demgemäß mit der Druckdifferenz P_{Z} - P_{S}, wenn die Pumpe 13 Hydrauliköl vom Druckspeicher 17 in den hydraulischen Antrieb 2 fördert, bzw. mit der Druckdifferenz P_{S} - P_{Z}, wenn die Pumpe 13 Hydrauliköl vom hydraulischen Antrieb 2 zum Druckspeicher 17 fördert. Die Druckdifferenz P_{S} - P_{Z} bzw. P_{Z} - P_{S} kann durchaus negativ sein, so daß dann die Pumpe 13 durch die Druckdifferenz ihrerseits angetrieben wird. Dadurch kann der Motor 14 als Generator wirken, wie dies schon bekannt ist. Damit eine solche Energierückgewinnung vorteilhaft möglich ist, wird der Motor 14 in bekannter Weise durch einen Leistungssteller 24 betrieben, der beispielsweise ein Frequenzumrichter ist. Der Leistungssteller 24 wird vom Steuer- und Regelgerät 25 angesteuert, welches seinerseits von einer nicht dargestellten Aufzugssteuerung Befehle erhält. Dargestellt ist lediglich eine Steuerleitung 26, über die die Befehle von den Bedientableaus der Aufzugsanlage an das Steuer- und Regelgerät 25 übermittelt werden.

Steht die Kabine 1 des Aufzugs still, so sind das Zylinderleitungs-Absperrventil 12 und das Speicherleitungs-Absperrventil 15, beide ansteuerbar vom Steuer- und Regelgerät 25, geschlossen. Sie sind also beim Stillstand der Kabine 1 nicht angesteuert.

Soll sich die Kabine 1 abwärts bewegen, so werden durch das Steuer- und Regelgerät 25 das Zylinderleitungs-Absperrventil 12 und das Speicherleitungs-Absperrventil 15 geöffnet und der Motor 14 in seiner ersten Drehrichtung betrieben, daß die Pumpe 13 Hydrauliköl vom Druckraum 9 in den Druckspeicher 17 fördert. Dabei wirkt über der Pumpe 13 die Druckdifferenz P_{S} - P_{Z}. Das bedeutet gleichzeitig, daß elektrische Energie für den Betrieb des Motors 14 nur so lange aufgewendet werden muß, solange der Druck P_{Z} kleiner ist als der Druck P_{S}. Weil ein Geschwindigkeits-Einstellventil verzichtbar ist, entsteht auch ein entsprechender Druckverlust nicht. Dies wirkt sich positiv auf den Gesamtwirkungsgrad aus, ermöglicht also einen energiesparenden Betrieb des Aufzugs.

Soll sich die Kabine 1 aufwärts bewegen, so werden durch das Steuer- und Regelgerät 25 das Zylinderleitungs-Absperrventil 12 und das Speicherleitungs-Absperrventil 15 ebenfalls geöffnet und der Motor 14 in seiner zweiten Drehrichtung betrieben, daß die Pumpe 13 Hydrauliköl vom Druckspeicher 17 in den Druckraum 9 fördert. Dabei wirkt über der Pumpe 13 die Druckdifferenz P_{Z} - P_{S}. Das bedeutet gleichzeitig, daß elektrische Energie für den Betrieb des Motors 14 nur so lange aufgewendet werden muß, solange der Druck P_{S} kleiner ist als der Druck P_{Z}.

Da grundsätzlich nur eine der jeweiligen Druckdifferenz P_{S} - P_{Z} bzw.
P_{Z} - P_{S} entsprechende elektrische Antriebsleistung aufgewendet werden muß, kann der elektrische Anschlußwert für den Motor 14 sehr viel kleiner sein als bei herkömmlichen hydraulischen Schaltungen. Folglich ist auch der zum Betrieb der Pumpe 13 nötige Motor 14 auf eine kleinere Nennleistung auszulegen. Damit entstehen Kostenvorteile für den Motor 14 selbst, bei Anschlußwert-Tarifierung durch den kleineren Anschlußwert und bei Leistungs-Tarifierung durch den kleineren Verbrauch an elektrischer Energie. Es wird nach der Erfindung auch vermieden, daß einmal mittels einer Pumpe auf hohen Druck gebrachtes Hydrauliköl wieder in Richtung Tank 21 entspannt wird und dabei seine potentielle Energie abgibt bzw. verliert.

Vorteilhaft ist weiter, daß der Tank 21 klein bemessen sein kann. Er dient eigentlich nur dazu, eine Differenzmenge an Hydrauliköl aufzunehmen, die den Leckageverlusten entspricht. Diese Leckageverluste können durch eine Leckageleitung 30 in den Tank 21 abfließen.

Der Druck P_{Z} in der Zylinderleitung 11 ist mit Hilfe eines Lastdrucksensors 31 erfaßbar. Er wird an das Steuer- und Regelgerät 25 übermittelt. Der schon erwähnte Druckschalter 22 wertet den Druck P_{S} in der Speicherleitung 16 aus. Der Druckschalter 22 enthält auch die Funktionalität eines Drucksensors. Der so von ihm ermittelte Druck in der Speicherleitung 16 wird ebenfalls an das Steuer- und Regelgerät 25 übermittelt. Somit kennt das Steuer- und Regelgerät 25 die beiden Drücke P_{Z} und P_{S} und ist so in der Lage, diese Drücke bei der Steuerung bzw. Regelung des Aufzugs zu berücksichtigen, was noch ausgeführt werden wird.

Die erfindungsgemäße Lösung hat außerdem den bemerkenswerten Vorteil, daß zum Betrieb des hydraulischen Aufzugs kein proportional vorsteuerbares Ventil erforderlich ist. Bei vielen herkömmlichen hydraulischen Aufzugsanlagen sind getrennte vorsteuerbare Ventile für die Aufwärts- und die Abwärtsfahrt vorhanden. Dieser Aufwand wird durch die Erfindung vermieden. Die Steuer- bzw. Regelkette ist damit auch sehr einfach und übersichtlich, weil nur mittels eines einzigen Elements, nämlich mittels des Motors 14, die Geschwindigkeit der Kabine 1 gesteuert bzw. geregelt wird.

Es wurde erwähnt, daß beim Betrieb des Aufzugs, nämlich bei der Fahrt der Kabine 1, das Zylinderleitungs-Absperrventil 12 und das Speicherleitungs-Absperrventil 15 geöffnet sein müssen. Soll also die Kabine 1 aus dem Stillstand bewegt werden, müssen das Zylinderleitungs-Absperrventil 12 und das Speicherleitungs-Absperrventil 15 geöffnet werden. Diese Betriebssituation, also das Öffnen des Zylinderleitungs-Absperrventils 12 und des Speicherleitungs-Absperrventils 15, ist hinsichtlich der Druckverhältnisse kritisch und verlangt nach besonderen Maßnahmen zur Steuerung. Die Gründe dafür werden nachfolgend erläutert.

Beim Stillstand der Kabine 1 sind zunächst das Zylinderleitungs-Absperrventil 12 und das Speicherleitungs-Absperrventil 15 geschlossen. Am Zylinderleitungs-Absperrventil 12 liegt auf der dem Antrieb 2 zugewandten Seite der Druck Pz an, am Speicherleitungs-Absperrventil 15 auf der dem Druckspeicher 17 zugewandten Seite der Druck P_{S}. Der Druck an den jeweils anderen Anschlüssen, also an jenen, die der Pumpe 13 zugewandt sind, ist nicht eindeutig festgelegt. Nach einem längeren Stillstand der Kabine 1 hat sich der Druck wegen der Leckverluste der Pumpe 13 abgebaut. Einerseits hat sich eine zuvor vorhandene Druckdifferenz zwischen den beiden Seiten der Pumpe 13 abgebaut, so daß an den der Pumpe 13 zugewandten Anschlüssen des Zylinderleitungs-Absperrventils 12 und des Speicherleitungs-Absperrventils 15 der gleiche Druck herrscht. Andererseits hat sich der Druck wegen des über die Leckageleitung 30 in den Tank 21 abfließenden Hydrauliköls vermindert, im Extremfall annähernd vollständig, so daß innerhalb der Pumpe 13 und an deren beiden Anschlüssen zum Zylinderleitungs-Absperrventil 12 und zum Speicherleitungs-Absperrventil 15 nur ein Druck herrscht, der kaum verschieden ist vom atmosphärischen Druck.

Daraus folgt nun, daß beim Öffnen des Zylinderleitungs-Absperrventils 12 und des Speicherleitungs-Absperrventils 15 schlagartige Druckänderungen auftreten, die sich auch durch Geräusche unangenehm bemerkbar machen. Die schlagartigen Druckänderungen belasten außerdem die Pumpe 13 ganz erheblich, was nachteilig für deren Betrieb und Lebensdauer sein kann. Diese Probleme sind offenbar, wie schon erwähnt, auch beim Gegenstand der WO-A-99/33740 vorhanden, wo insgesamt vier Ventil zu schalten sind. Durch das nachfolgend geschilderte Steuerungsverfahren werden die dadurch hervorgerufenen Probleme beseitigt und ein komfortabler Betrieb ermöglicht.

Erfindungsgemäß werden die vorhandenen Mittel wie Pumpe 13, Motor 14, Druckschalter 22, Leistungssteller 24 und das Steuer- und Regelgerät 25 auch dazu benutzt, die schlagartigen Druckänderungen zu vermeiden. Es sind also neben dem Lastdrucksensor 31 keine zusätzlichen Mittel erforderlich.

Im Ausgangszustand bei Stillstand der Kabine 1 sind, wie schon erwähnt, das Zylinderleitungs-Absperrventil 12 und das Speicherleitungs-Absperrventil 15 geschlossen und der elektrische Motor 14 der Pumpe 13 steht still. Soll sich die Kabine 1 in Bewegung setzen, so wird in einem ersten Verfahrensschritt der elektrische Motor 14 der Pumpe 13 so angesteuert, daß er am pumpenseitigen Anschluß des Speicherleitungs-Absperrventils 15 einen Druck aufbaut. Dieser Druckaufbau geschieht dadurch, daß Motor 14 und Pumpe 13 langsam in jener Drehrichtung drehen, daß Hydrauliköl in Richtung zum Speicherleitungs-Absperrventil 15 gefördert wird. Die geförderte Menge an Hydrauliköl ist allerdings minimal, weil das Zylinderleitungs-Absperrventil 12 und das Speicherleitungs-Absperrventil 15 geschlossen sind. Gleichwohl erfolgt der gewünschte Druckaufbau. Der Antrieb des Motors 14 erfolgt dabei nur sehr kurze Zeit. Diese Zeitdauer wird als erste Ausgleichszeit t_{A1} bezeichnet. Es hat sich gezeigt, daß etwa 100 bis 300 msec Laufzeit bei einer reduzierten Drehzahl n_{red} ausreichen, um einen Druck aufzubauen, der etwa dem Druck P_{S} in der Speicherleitung 16 entspricht. Wenn nun in einem zweiten Verfahrensschritt das Speicherleitungs-Absperrventil 15 geöffnet wird, entsteht keine schlagartige Druckänderung, so daß das zuvor geschilderte Problem beim Öffnen des Speicherleitungs-Absperrventils 15 nicht existiert.

Nach dem Ablauf der Ausgleichszeit t_{A1} steht der Motor 14 und damit auch die Pumpe 13 wieder still. In einem dritten Verfahrensschritt, der mit dem Ablauf der Ausgleichszeit t_{A1} beginnt, bleibt der Motor 14 magnetisiert, was durch entsprechende Ansteuerung des Leistungsstellers 24 durch das Steuer- und Regelgerät 25 erreicht wird. Die Pumpe 13 ist dadurch in der Lage, Drehmoment aufzunehmen, ohne daß sie sich zu drehen beginnt. In dem Moment steht nämlich auf der dem Speicherleitungs-Absperrventil 15 zugewandten Seite der Pumpe 13 der Druck P_{S} in der Speicherleitung 16 an, während auf der dem Zylinderleitungs-Absperrventil 12 zugewandten Seite der Pumpe 13 ein mehr oder weniger undefinierte Druck herrscht, der im ursprünglichen Ausgangszustand kaum verschieden war vom atmosphärischen Druck und dann durch den Lauf der Motors 14 für die Dauer der Ausgleichszeit t_{A1} noch in unbestimmter Weise vermindert worden ist.

Die Zeitdauer, während der der Motor 14 magnetisiert bleibt, ohne daß er sich dreht, wird als zweite Ausgleichszeit t_{A2} bezeichnet. Während dieser Ausgleichszeit t_{A2} kann sich nun die Druckdifferenz zwischen den beiden Seiten der Pumpe 13 abbauen, was eine Folge der internen Leckverluste innerhalb der Pumpe 13 ist. Es hat sich gezeigt, daß diese zweite Ausgleichszeit t_{A2} etwa 200 msec betragen sollte. Am Ende der zweiten Ausgleichszeit t_{A2} entspricht nun der Druck auf der der Pumpe 13 zugewandten Seite des Zylinderleitungs-Absperrventils 12 etwa dem Druck P_{S} in der Speicherleitung 16, während auf der anderen Seite des Zylinderleitungs-Absperrventils 12 der Druck P_{Z} in der Zylinderleitung 11 herrscht. Da die Drücke P_{S} und Pz die gleiche Größenordnung haben, kann nun das Zylinderleitungs-Absperrventil 12 geöffnet werden, ohne daß es zu einer schlagartigen Druckänderung einer solchen Größe kommt, daß Probleme durch Druckschläge und Geräusche entstehen.

Nun sind also das Zylinderleitungs-Absperrventil 12 und das Speicherleitungs-Absperrventil 15 geöffnet. Durch Ansteuerung des Motors 14 der Pumpe 13 über den Leistungssteller 24 kann nun, allenfalls nach einer weiteren Ausgleichszeit t_{A3}, die Fahrt der Kabine 1 beginnen. Die Ausgleichszeit t_{A3} kann etwa 200 msec betragen, ist aber nicht wirklich erforderlich.

In der Fig. 2 ist der Druckverlauf beidseits der Pumpe 13 in Form von Diagrammen gezeigt. Im oberen Teil des Diagramms ist der Verlauf des Druckes am pumpenseitigen Anschluß des Speicherleitungs-Absperrventils 15 gezeigt und mit P_{15P} bezeichnet. Während der ersten Ausgleichszeit t_{A1} steigt dieser Druck an. Im unteren Teil des Diagramms ist der Verlauf des Druckes am pumpenseitigen Anschluß des Zylinderleitungs-Absperrventil 12 gezeigt. Er steigt während der zweiten Ausgleichszeit t_{A2} an.

Das hier geschilderte Verfahren zur Vorbereitung einer Fahrt der Kabine 1 läuft in gleicher Weise ab, ist also nicht abhängig davon, ob die Kabine 1 danach aufwärts oder abwärts fahren soll.

Während der Fahrt der Kabine 1 bleiben das Zylinderleitungs-Absperrventil 12 und das Speicherleitungs-Absperrventil 15 elektrisch angesteuert. Die Steuerung bzw. Regelung der Fahrt der Kabine 1 für Aufwärts- und für Abwärtsfahrt erfolgt nun allein durch Steuerung bzw. Regelung der Drehrichtung und der Drehzahl des Motors 14 mit Hilfe des Leistungsstellers 24.

Die Werte für die erste Ausgleichszeit t_{A1}, die zweite Ausgleichszeit t_{A2}, die allenfalls vorgesehene dritte Ausgleichszeit t_{A3} und die Drehzahl n_{red} werden empirisch bestimmt und im Steuer- und Regelgerät 25 abgelegt. Mit so empirisch bestimmten Werten findet also eine Steuerung von Zylinderleitungs-Absperrventil 12, Speicherleitungs-Absperrventil 15 und Motor 14 der Pumpe 13 statt.

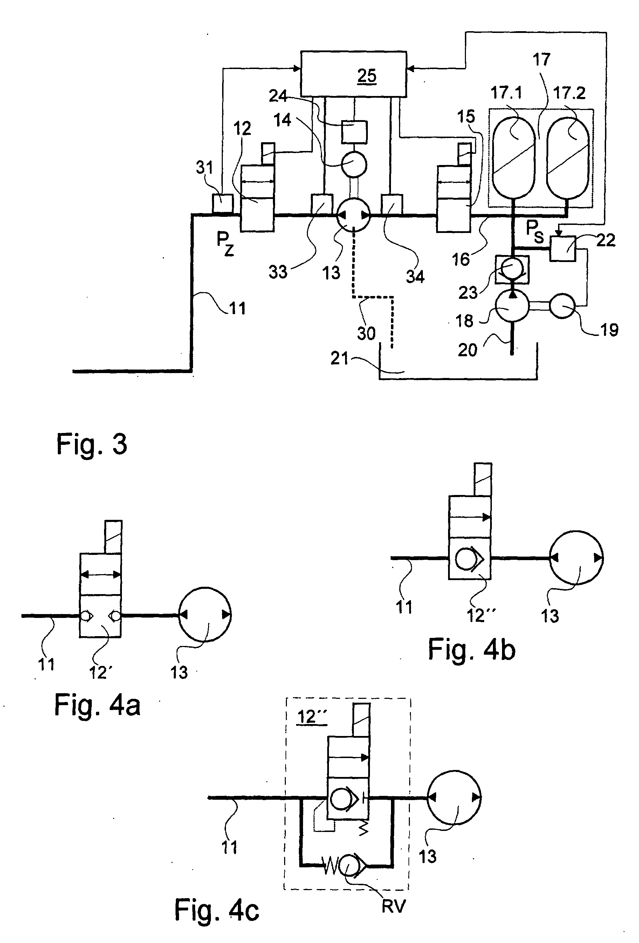

Es kann aber auch vorteilhaft sein, für das Verfahren vor Beginn einer Fahrt der Kabine 1 (Fig. 1) eine Regelung anzuwenden. Eine solche Regelung wird möglich, wenn beidseits der Pumpe 13 in den Leitungen zum Zylinderleitungs-Absperrventil 12 und zum Speicherleitungs-Absperrventil 15 je ein weiterer Drucksensor vorgesehen wird, wie dies in der Fig. 3 dargestellt ist, die im übrigen einen Ausschnitt aus der Fig. 1 darstellt. Neu gegenüber der Fig. 1 ist hier ein weiterer Drucksensor 33 vorhanden, mit dessen Hilfe der Druck im Leitungsabschnitt zwischen dem Zylinderleitungs-Absperrventil 12 und der Pumpe 13 meßbar ist und dem Steuer- und Regelgerät 25 übermittelt wird. Außerdem ist neu ein weiterer Drucksensor 34, mit dessen Hilfe der Druck im Leitungsabschnitt zwischen dem Speicherleitungs-Absperrventil 15 und der Pumpe 13 meßbar ist und dem Steuer- und Regelgerät 25 übermittelt wird. Mit Hilfe dieser beiden zusätzlichen Drucksensoren 33 und 34 ist es nun möglich, statt einer Steuerung der Drücke P_{15P} und P_{12P} eine Regelung derselben vorzunehmen. Im zuvor erwähnten ersten Verfahrensschritt wird somit die Pumpe 13 nicht während einer vorgegebenen ersten Ausgleichszeit t_{A1} betrieben, sondern die Pumpe 13 wird genau so lange betrieben, bis der durch den Lauf der Pumpe 13 entstehende Druck P_{15P} am pumpenseitigen Anschluß des Speicherleitungs-Absperrventils 15 genau so groß ist wie der Druck Ps in der Speicherleitung 16.

Ähnliches gilt für den Druck P_{12P}. Hier erfolgt nun in Übereinstimmung mit der zuvor geschilderten Steuerungslösung zunächst während der zweiten Ausgleichszeit t_{A2} zunächst ein Anstieg des Druckes P_{12P} bis auf einen Wert, der dem Druck P_{S} in der Speicherleitung 16 entspricht. In vorteilhafter Weise ist es nun aber zusätzlich möglich, durch einen weiteren Betrieb des Motors 14 diesen Druck an den tatsächlichen Druck P_{Z} in der Zylinderleitung 11 anzugleichen. Ist der Druck P_{S} in der Speicherleitung 16 niedriger als der Druck P_{Z} in der Zylinderleitung 11, so wird in einem weiteren Verfahrensschritt der Motor 14 wiederum betrieben und zwar so, daß die Pumpe 13 Hydrauliköl in Richtung zum Zylinderleitungs-Absperrventil 12 fördert und zwar genau so lange, bis der Druck P_{12P} genau gleich groß ist wie der Druck P_{Z} in der Zylinderleitung 11. Ist der Druck P_{S} in der Speicherleitung 16 höher als der Druck P_{Z} in der Zylinderleitung 11, so wird in diesem weiteren Verfahrensschritt der Motor 14 so betrieben, daß die Pumpe 13 Hydrauliköl in Richtung zum Speicherleitungs-Absperrventil 15 fördert und zwar nun genau so lange, bis der Druck P_{12P} genau gleich groß ist wie der Druck P_{Z} in der Zylinderleitung 11. In beiden Fällen wird also erreicht, daß der Druck beidseits des Zylinderleitungs-Absperrventils 12 gleich groß ist, so daß das anschließende Öffnen des Zylinderleitungs-Absperrventils 12 absolut keine Druckänderung ergibt.

Eine solche Lösung ist insbesondere auch vorteilhaft, wenn etwa nach etlichen Betriebsjahren des Aufzugs einzelne Aggregate, so die Pumpe 13, ausgetauscht werden müssen. Die neu eingebaute Pumpe 13 könnte ein anderes Leckageverhalten zeigen, so daß die vorbestimmten Werte für die Ausgleichszeiten t_{A1} und t_{A2} an sich korrigiert werden müßten. Vorteilhaft ist eine solche verbesserte Lösung aber auch hinsichtlich des Temperatureinflusses. Da das Hydrauliköl während des Betriebs des Aufzugs unterschiedliche Temperaturen aufweisen kann und das Leckageverhalten der Pumpe 13 auch von der Temperatur des Hydrauliköls abhängt, führt die soeben geschilderte Regelung der Drücke P_{15P} und P_{12P} zu einem verbesserten Betriebsverhalten. Es sei aber betont, daß diese Regelung anstelle der zuvor erwähnten Steuerung in der Regel nicht erforderlich ist.

In der Fig. 4 sind drei alternative Lösungen gezeigt, die das Zylinderleitungs-Absperrventil 12 betreffen. Die Fig. 4a zeigt das Zylinderleitungs-Absperrventil 12, durch dessen Symbol ausgesagt ist, daß es sich um ein doppelt sperrendes AUF-ZU-Absperrventil handelt. Durchfluß kann nur dann erreicht werden, wenn das Zylinderleitungs-Absperrventil 12 elektrisch angesteuert wird. Es muß also sowohl für Aufwärts-, als auch für Abwärtsfahrt der Kabine 1 elektrisch angesteuert werden. Diese besondere Ausgestaltung des Zylinderleitungs-Absperrventils 12 ist deshalb als Zylinderleitungs-Absperrventil 12' bezeichnet.

Die Fig. 4b zeigt ein anderes Zylinderleitungs-Absperrventil 12, durch dessen Symbol ausgesagt ist, daß es sich um ein einfach sperrendes AUF-ZU-Absperrventil handelt. Diese alternative Ausführungsform des Zylinderleitungs-Absperrventils 12 ist deshalb als Zylinderleitungs-Absperrventil 12" bezeichnet. Es ist so gestaltet, daß es selbsttätig öffnet, wenn die Pumpe 13 Hydrauliköl in die Zylinderleitung 11 hinein fördert. Sobald die Pumpe 13 nicht fördert, schließt es wieder. Der Fluß von Hydrauliköl von der Zylinderleitung 11 in Richtung Pumpe 13 ist hingegen nur dann möglich, wenn das Zylinderleitungs-Absperrventil 12" elektrisch erregt wird. Im Zylinderleitungs-Absperrventil 12" kann also ein Rückschlagventil integriert sein.

Das Zylinderleitungs-Absperrventil 12" kann alternativ aber auch aus einem AUF-ZU-Ventil und einem parallel geschaltetem Rückschlagventil RV bestehen, wie dies in der Fig. 4c dargestellt ist. Die Gesamtheit von AUF-ZU-Ventil und dem parallel geschalteten Rückschlagventil RV bildet dann das Zylinderleitungs-Absperrventil 12".

Wird ein solches Zylinderleitungs-Absperrventil 12" in Verbindung mit den Fig. 1 oder 3 angewendet, so muß das Zylinderleitungs-Absperrventil 12" dann elektrisch nicht angesteuert werden, wenn die Pumpe 13 Hydrauliköl in Richtung zum hydraulischen Antrieb 2 (Fig. 1) fördert. Das bedeutet insofern einen Vorteil, wenn dann das Zylinderleitungs-Absperrventil 12" automatisch öffnet. Somit kann das zuvor geschilderte Problem einer schlagartigen Druckänderung gar nicht auftreten. Das bedeutet also, daß die zuvor geschilderte zweite Ausgleichszeit t_{A2} im Steuerungsverfahren gar nicht vorgesehen werden muß. In vorteilhafter Weise wird also das Steuerungsverfahren ohne jede nachteilige Folge vereinfacht.

Bei der Aufwärtsfahrt der Kabine 1 muß nun das Zylinderleitungs-Absperrventil 12" gar nicht elektrisch angesteuert werden, denn es bleibt selbsttätig offen, solange die Pumpe 13 Hydrauliköl in Richtung hydraulischer Antrieb 2 fördert. Wird am Ende der Aufwärtsfahrt der Kabine 1 der Motor 14 stillgesetzt, so schließt das Zylinderleitungs-Absperrventil 12" selbsttätig.

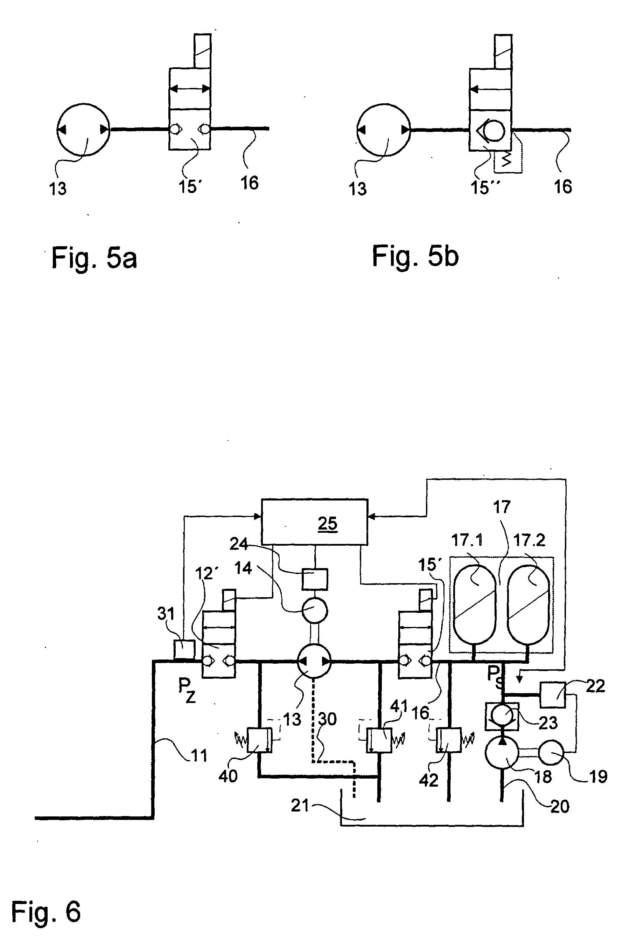

Ausführungsvarianten vergleichbarer Art sind auch hinsichtlich des Speicherleitungs-Absperrventils 15 vorteilhaft. In der Fig. 5 sind zwei entsprechende Alternativen gezeigt. In der Fig. 5a ist das Speicherleitungs-Absperrventil 15 ein doppelt sperrendes Ventil, das deshalb als Speicherleitungs-Absperrventil 15' bezeichnet ist, und in der Fig. 5b ist das Speicherleitungs-Absperrventil 15 ein einfach sperrendes Ventil, das als Speicherleitungs-Absperrventils 15" bezeichnet ist. Auch eine der Fig. 4c entsprechende analoge Ausgestaltung des Speicherleitungs-Absperrventils 15" ist möglich. Hinsichtlich der Wirkungsweise besteht eine Analogie zum Zylinderleitungs-Absperrventil 12' bzw. 12". Ist das Speicherleitungs-Absperrventil 15 ein doppelt sperrendes Ventil 15', wie in Fig. 5a dargestellt, so muß dieses elektrisch angesteuert werden, wenn Durchfluß durch dieses Ventil erreicht werden soll. Ist es hingegen als einfach sperrendes Speicherleitungs-Absperrventils 15" gemäß Fig. 5b ausgebildet, dann muß es immer nur dann elektrisch angesteuert werden, wenn Durchfluß vom Druckspeicher 17 (Fig. 1 und 3) durch die Speicherleitung 16 zum hydraulischen Antrieb 2 (Fig. 1) erzielt werden soll. Dann aber, wenn, wie vorstehend beschrieben, im ersten Verfahrensschritt der elektrische Motor 14 der Pumpe 13 so angesteuert wird, daß er am pumpenseitigen Anschluß des Speicherleitungs-Absperrventils 15 einen Druck aufbaut, so wird das Rückschlagventil des Speicherleitungs-Absperrventils 15" automatisch geöffnet, sobald der Druck P_{15P} größer wird als der Druck P_{S} in der Speicherleitung 16. Damit erfolgt der Antrieb des Motors 14 nicht durch Vorgabe der ersten Ausgleichszeit t_{A1}. Der Motor 14 wird zunächst eingeschaltet, nun aber nicht nach Ablauf der ersten Ausgleichszeit t_{A1} wieder ausgeschaltet. Vielmehr erfolgt bei diesem vorteilhaften Ausführungsbeispiel die Ausschaltung des Motors 14 dadurch, daß der Druck P_{S} in der Speicherleitung 16 etwas ansteigt, was durch den im Druckschalter 22 enthaltenen Drucksensor feststellbar ist und somit auch durch das Steuer- und Regelgerät 25 erkennbar ist. Der zweite Verfahrensschritt, das Öffnen des Speicherleitungs-Absperrventils 15", muß also dann nicht besonders eingeleitet werden. Während des daran anschließenden Verfahrensschritts, also während des Ablaufs der zweiten Ausgleichszeit t_{A2}, wird das Speicherleitungs-Absperrventil 15" elektrisch angesteuert, um zu verhindern, daß es nun wegen des Leckageverlustes über die Pumpe 13, der zum Aufbau des Druckes P_{12P} am pumpenseitigen Anschluß des Zylinderleitungs-Absperrventils 12 führt, wieder schließt, was diesen Aufbau des Druckes P_{12P} verhindern würde. Das Speicherleitungs-Absperrventils 15" muß also so lange eingeschaltet bleiben, bis das Zylinderleitungs-Absperrventil 12' bzw. 12" geschaltet hat.

Bei einer im Anschluß an das Öffnen der Zylinderleitungs-Absperrventils 12' bzw. 12" beginnenden Fahrt der Kabine 1 muß das Speicherleitungs-Absperrventil 15" aber nur bei Aufwärtsfahrt der Kabine 1 elektrisch angesteuert bleiben. Bei Abwärtsfahrt der Kabine 1 ist die elektrische Ansteuerung des Speicherleitungs-Absperrventils 15" nicht nötig, weil das Rückschlagventil des Speicherleitungs-Absperrventils 15" durch den von der Pumpe 13 erzeugten Druck, der höher sein muß als der Druck P_{S} in der Speicherleitung 16, selbsttätig offen bleibt. Erst am Ende der Abwärtsfahrt, wenn der Motor 14 stillgesetzt wird, schließt das Speicherleitungs-Absperrventil 15" selbsttätig wieder.

In der Fig. 6 ist ein hydraulisches Schema gezeigt, bei dem das Zylinderleitungs-Absperrventil 12 und das Speicherleitungs-Absperrventil 15 je ein doppelt sperrendes Ventil ist. Entsprechend sind sie als Zylinderleitungs-Absperrventil 12' und als Speicherleitungs-Absperrventil 15' bezeichnet. Weil diese beiden Ventile 12' bzw. 15' ihrer Bauart entsprechend durch den von der Pumpe 13 erzeugten Druck nicht geöffnet werden können, ist es erforderlich, daß zwischen der Pumpe 13 und dem pumpenseitigen Anschluß des Zylinderleitungs-Absperrventils 12' ein Anschluß zu einem ersten Druckbegrenzungsventil 40 vorhanden ist und daß zwischen der Pumpe 13 und dem pumpenseitigen Anschluß des Speicherleitungs-Absperrventils 15' ein Anschluß zu einem zweiten Druckbegrenzungsventil 41 vorhanden ist. Dadurch wird verhindert, daß der Druck in den Leitungen zwischen der Pumpe 13 und dem pumpenseitigen Anschluß des Zylinderleitungs-Absperrventils 12' einerseits und zwischen der Pumpe 13 und dem pumpenseitigen Anschluß des Speicherleitungs-Absperrventils 15' andererseits zu hoch wird. Der durch die Pumpe 13 erzeugte Druck wird also unter allen Umständen auf jenen Druck begrenzt, bei dem das erste Druckbegrenzungsventil 40 bzw. das zweite Druckbegrenzungsventil 41 öffnet.

In analoger Weise ist aus Sicherheitsgründen auch an die Speicherleitung 16 ein Speicher-Druckbegrenzungsventil 42 angeschlossen, das verhindert, daß in dieser Speicherleitung 16 und im Druckspeicher 17 ein zu hoher Druck entsteht. In den Fig. 1 und 3 war dieses Speicher-Druckbegrenzungsventil 42 weggelassen worden, ist aber aus Sicherheitsgründen auch dort vorhanden. Bedeutsam ist hier, wie das zweite Druckbegrenzungsventil 41 und das Speicher-Druckbegrenzungsventil 42 auszulegen sind. Da die Pumpe 13 eine große Förderleistung hat, um die maximale Geschwindigkeit der Kabine 1 (Fig. 1) von beispielsweise 1 m/sec zu ermöglichen, hat das zweite Druckbegrenzungsventil 41 vorteilhaft eine auf diese große Förderleistung abgestimmte große Nennweite.

Die Ladepumpe 18 hat demgegenüber eine kleinere Förderleistung, weil deren Aufgabe darin besteht, lediglich Leckverluste auszugleichen. Entsprechend kann das Speicher-Druckbegrenzungsventil 42 vorteilhaft eine entsprechend kleine Nennweite aufweisen.

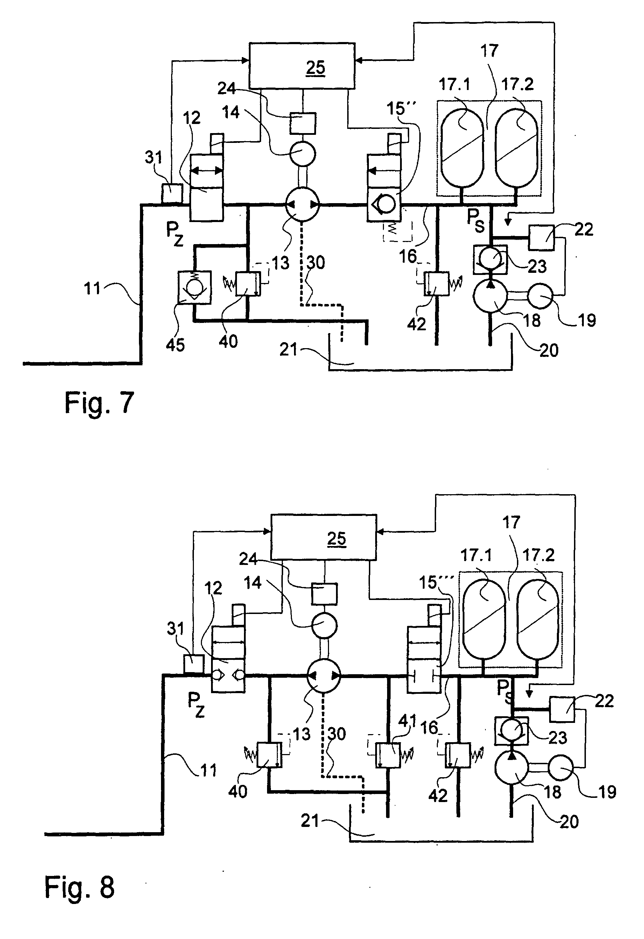

In der Fig. 7 ist ein vorteilhaftes weiteres hydraulisches Schema gezeigt, bei dem das Speicherleitungs-Absperrventil 15 ein einfach sperrendes Ventil wie in Fig. 5b ist und entsprechend mit der Bezugszahl 15" versehen ist. Hier ist das in der Fig. 6 gezeigte zweite Druckbegrenzungsventil 41 nicht vorhanden. Es ist aus folgenden Gründen nicht erforderlich. Erzeugt die Pumpe 13 am pumpenseitigen Anschluß des Speicherleitungs-Absperrventil 15" einen hohen Druck, so muß dieser Druck nicht durch das zweite Druckbegrenzungsventil 41 abgebaut werden. Dann nämlich wird durch den Druck das Speicherleitungs-Absperrventil 15" aufgedrückt, so daß der entstehende Druck durch das Speicher-Druckbegrenzungsventil 42 abgebaut werden kann. Allerdings muß in diesem Fall das Speicher-Druckbegrenzungsventil 42 eine große Nennweite aufweisen, weil es unter Umständen die ganze Förderleistung der Pumpe 13 ableiten muß.

Die Anwendung des einfach sperrenden Speicherleitungs-Absperrventils 15" ist folglich zusätzlich deshalb vorteilhaft, weil es die Einsparung eines Druckbegrenzungsventils ermöglicht.

In der Fig. 7 ist parallel zum ersten Druckbegrenzungsventil 40 noch ein Nachsaugventil 45 gezeigt. Dieses Nachsaugventil 45 hat den Vorteil, daß dann, wenn die Pumpe 13 im zuvor beschriebenen Verfahren zur Vorbereitung einer Fahrt der Kabine 1 Hydrauliköl zum Speicherleitungs-Absperrventil 15" fördert. Durch dieses Nachsaugventil 45 wird vermieden, daß in der Leitung zwischen dem Zylinderleitungs-Absperrventil 12 und der Pumpe 13 ein Unterdruck entsteht.

In der Fig. 8 ist eine Variante des in der Fig. 6 gezeigten Hydraulikschemas dargestellt. Im Unterschied zu Fig. 6 ist bei Fig. 8 das Speicherleitungs-Absperrventil 15 wiederum von einer abweichenden Bauart. Es ist ein sogenanntes nicht leckfreies Ventil, das wegen der unterschiedlichen Bauart als Speicherleitungs-Absperrventil 15''' bezeichnet ist. Dadurch ergibt es sich, daß bei stillstehender Pumpe 13 eine Leckage am Speicherleitungs-Absperrventil 15''' auftritt. Entsprechend entsteht am dem Speicherleitungs-Absperrventil 15''' zugewandten Seite ein mit der Leckage korrelierter Druck. Dadurch entsteht beim Stillstand der Pumpe 13 auch an der Pumpe 13 eine Leckage, die über die Leckageleitung 30 in den Tank 21 abgeführt wird. Bedingung für diese Ausgestaltung ist, daß die Leckage am Speicherleitungs-Absperrventil 15''' kleiner sein muß als die Leckage der Pumpe 13. Dies hat seinen Grund darin, daß sich am dem Speicherleitungs-Absperrventil 15''' zugewandten Seite der Pumpe 13 ein Druck entsteht, der vom Druck in der Speicherleitung 16 und dem Verhältnis der Leckagen von Pumpe 13 und Speicherleitungs-Absperrventil 15''' entspricht. Dieser Druck wirkt auch auf die Wellendichtung der Pumpe 13. Er darf bei den üblichen Pumpen einen bestimmten Wert nicht überschreiten. Kann nicht garantiert werden, daß die Leckage am Speicherleitungs-Absperrventil 15''' kleiner sein ist als die Leckage der Pumpe 13, so muß als Pumpe 13 eine Sonderbauart mit einer speziell hoch belastbaren Wellendichtung verwendet werden.

Dieses Beispiel zeigt, daß es unter Umständen auch auf die Bauart der Pumpe 13 ankommen kann. Für hydraulische Aufzüge werden in der Regel Schraubenspindelpumpen verwendet. Bei einem hydraulischen Aufzug gemäß den vorstehend beschriebenen Ausgestaltungen kann aber vorteilhaft als Pumpe 13 eine Innenzahnrad-Pumpe angewendet werden, weil diese eine kleine Bauform und einen sehr guten volumetrischen und Gesamtwirkungsgrad aufweisen.

Es kann aber auch vorteilhaft sein, als Pumpe 13 eine Schraubenspindelpumpe einzusetzen. Wird eine Pumpe 13 solcher Bauart angewendet, so kann die Leckageleitung 30 entfallen, weil bei solchen Pumpen lediglich eine Leckage zwischen dem Hoch- und dem Niederdruckraum der Pumpe 13 auftritt.

Die zuvor gezeigten Ausführungsbeispiele sind mit einer bestimmten Seilanordnung und mit einem Plungerzylinder als hydraulischer Antrieb 2 ausgeführt. Die erfindungsgemäßen Lösungen sind aber, wie eingangs schon erwähnt, hinsichtlich Vorrichtung und Verfahren nicht auf diese Lösungen beschränkt. Sowohl Direktantrieb der Aufzugskabine 1 durch den hydraulischen Antrieb 2 als auch andere Bauarten des hydraulischen Antriebs 2, so auch Zug- oder Druckzylinder wie auch doppelt wirkende Zylinder sind der erfindungsgemäßen und vorteilhaften Ausgestaltung zugänglich.

## Patentansprüche

1. Hydraulischer Aufzug zur Bewegung einer Kabine (1), mit einem Druckspeicher (17), bei dem der Fluß von Hydrauliköl zwischen einem hydraulischen Antrieb (2) durch eine Zylinderleitung (11) und dem Druckspeicher (17) durch eine Speicherleitung (16) mittels einer Pumpe (13) erzeugbar ist, welche von einem Motor (14) antreibbar ist, der aufgrund von Signalen eines Steuer- und Regelgeräts (25) von einem Leistungssteller (24) betrieben wird, und bei dem der Druckspeicher (17) mittels einer von einem Elektromotor (19) angetriebenen Ladepumpe (18), gesteuert von einem Druckschalter (22), mit Hydrauliköl aus einem Tank (21) aufladbar ist, **dadurch gekennzeichnet,**
- **daß** die Pumpe (13) einerseits unmittelbar an die ein elektrisch ansteuerbares Zylinderleitungs-Absperrventil (12; 12'; 12"), das ein AUF-ZU-Ventil ist, beinhaltende Zylinderleitung (11) mit dem hydraulischen Antrieb (2) und andererseits
- über ein elektrisch ansteuerbares Speicherleitungs-Absperrventil (15; 15'; 15 "), das ebenfalls ein AUF-ZU-Ventil ist, und die Speicherleitung (16) mit dem Druckspeicher (17) verbunden ist,
- **daß** an der Zylinderleitung (11) ein den Druck P_{Z} in dieser Leitung erfassender Lastdrucksensor (31) angeordnet ist,
- und **daß** vorhandene Mittel (13, 14, 24, 25) unter Mitwirkung des Druckschalters (22) und des Lastdrucksensors (31) zusätzlich so betreibbar sind, daß durch sie der Druck im Leitungsabschnitt zwischen der Pumpe (13) und dem Zylinderleitungs-Absperrventil (12; 12'; 12") und im Leitungsabschnitt zwischen der Pumpe (13) und dem Speicherleitungs-Absperrventil (15; 15'; 15") bei Stillstand der Kabine (1) so veränderbar ist, daß vor dem Öffnen des Zylinderleitungs-Absperrventils (12; 12'; 12") und des Speicherleitungs-Absperrventils (15; 15'; 15") die Druckdifferenzen am Speicherleitungs-Absperrventil (15; 15'; 15") und am Zylinderleitungs-Absperrventil (12; 12'; 12") weitgehend abgebaut sind.

2. Hydraulischer Aufzug nach Anspruch 1, **dadurch gekennzeichnet, daß** das Zylinderleitungs-Absperrventil (12) ein doppelt sperrendes Zylinderleitungs-Absperrventil (12') ist.

3. Hydraulischer Aufzug nach Anspruch 1, **dadurch gekennzeichnet, daß** das Zylinderleitungs-Absperrventil (12) ein einfach sperrendes Zylinderleitungs-Absperrventil (12") ist.

4. Hydraulischer Aufzug nach Anspruch 1, **dadurch gekennzeichnet, daß** das Zylinderleitungs-Absperrventil (12) ein einfach sperrendes Zylinderleitungs-Absperrventil (12") ist, das aus einem AUF-ZU-Ventil und einem parallel geschalteten Rückschlagventil (RV) gebildet ist.

5. Hydraulischer Aufzug nach einem der Ansprüche 1 bis 4, **dadurch gekennzeichnet, daß** das Speicherleitungs-Absperrventil (15) ein doppelt sperrendes Speicherleitungs-Absperrventil (15') ist.

6. Hydraulischer Aufzug nach einem der Ansprüche 1 bis 4, **dadurch gekennzeichnet, daß** das Speicherleitungs-Absperrventil (15) ein einfach sperrendes Speicherleitungs-Absperrventil (15") ist.

7. Hydraulischer Aufzug nach einem der Ansprüche 1 bis 4, **dadurch gekennzeichnet, daß** das Speicherleitungs-Absperrventil (15) ein einfach sperrendes Speicherleitungs-Absperrventil (15") ist, das aus einem AUF-ZU-Ventil und einem parallel geschalteten Rückschlagventil (RV) gebildet ist.

8. Hydraulischer Aufzug nach einem der Ansprüche 1 bis 7, **dadurch gekennzeichnet, daß** im Leitungsabschnitt zwischen dem Zylinderleitungs-Absperrventil (12, 12', 12") und der Pumpe (13) ein weiterer, der Erfassung eines Druckes P_{12P} in diesem Leitungsabschnitt dienender Drucksensor (33) angeordnet ist, dessen Signal dem Steuer- und Regelgerät (25) übermittelbar ist.

9. Hydraulischer Aufzug nach Anspruch 8, **dadurch gekennzeichnet, daß** im Leitungsabschnitt zwischen dem Speicherleitungs-Absperrventil (15, 15', 15") und der Pumpe (13) ein weiterer, der Erfassung eines Druck P_{15P} in diesem Leitungsabschnitt dienender Drucksensor (34) angeordnet ist, dessen Signal dem Steuer- und Regelgerät (25) übermittelbar ist.

10. Verfahren zur Steuerung und Regelung eines hydraulischen Aufzugs zur Bewegung einer Kabine (1), mit einem Druckspeicher (17), bei dem der Fluß von Hydrauliköl zwischen einem hydraulischen Antrieb (2) durch eine Zylinderleitung (11) und dem Druckspeicher (17) durch eine Speicherleitung (16) mittels einer Pumpe (13) erzeugbar ist, welche von einem Motor (14) antreibbar ist, der aufgrund von Signalen eines Steuer- und Regelgeräts (25) von einem Leistungssteller (24) betrieben wird, und bei dem der Druckspeicher (17) mittels einer von einem Elektromotor (19) angetriebenen Ladepumpe (18), gesteuert von einem Druckschalter (22), mit Hydrauliköl aus einem Tank (21) aufladbar ist, **dadurch gekennzeichnet, daß** vor Beginn einer Aufwärts- oder Abwärtsfahrt der Kabine (1)
- in einem ersten Verfahrensschritt der elektrische Motor (14) der Pumpe (13) so angesteuert wird, daß er am pumpenseitigen Anschluß eines Speicherleitungs-Absperrventils (15, 15', 15") einen Druck aufbaut, der etwa dem Druck P_{S} in der Speicherleitung (16) entspricht, daß
- in einem zweiten Verfahrensschritt das Speicherleitungs-Absperrventil (15, 15', 15 ") geöffnet wird, daß
- einem dritten Verfahrensschritt der Motor (14) magnetisiert bleibt, und daß
- anschließend ein Zylinderleitungs-Absperrventil (12, 12', 12") geöffnet wird.

11. Verfahren nach Anspruch 10, **dadurch gekennzeichnet, daß** der elektrische Motor (14) während einer ersten Ausgleichszeit (t_{A1}) betrieben wird.

12. Verfahren nach Anspruch 11, **dadurch gekennzeichnet, daß** die erste Ausgleichszeit (t_{A1}) etwa 100 bis 300 msec lang ist.

13. Verfahren nach Anspruch 11 oder 12, **dadurch gekennzeichnet, daß** der elektrische Motor (14) während der ersten Ausgleichszeit (t_{A1}) mit einer reduzierten Drehzahl n_{red} betrieben wird.

14. Verfahren nach einem der Ansprüche 11 bis 13, **dadurch gekennzeichnet, daß** der Motor (14) für die Dauer einer zweiten Ausgleichszeit (t_{A2}) magnetisiert bleibt.

15. Verfahren nach Anspruch 14, **dadurch gekennzeichnet, daß** die zweite Ausgleichszeit (t_{A2}) etwa 200 msec lang ist.

16. Verfahren nach einem der Ansprüche 11 bis 15, **dadurch gekennzeichnet, daß** nach dem Öffnen des Speicherleitungs-Absperrventils (15, 15', 15") und dem verzögert erfolgenden Öffnen des Zylinderleitungs-Absperrventils (12, 12', 12") der Ablauf einer dritten Ausgleichszeit (t_{A3}) abgewartet wird, ehe die Fahrt der Kabine (1) für Aufwärts- oder Abwärtsfahrt durch Steuerung bzw. Regelung der Drehzahl und der Drehrichtung des Motors (14) mit Hilfe des Leistungsstellers (24) gestartet wird.

17. Verfahren nach Anspruch 16, **dadurch gekennzeichnet, daß** die dritte Ausgleichszeit (t_{A3}) maximal 200 msec lang ist.

18. Verfahren nach Anspruch 11, **dadurch gekennzeichnet, daß** die erste Ausgleichszeit (t_{A1}) keine vorbestimmte Länge hat, sondern daß deren Ende dadurch bestimmt ist, daß der durch den Lauf der Pumpe (13) entstehende Druck P_{15P} am pumpenseitigen Anschluß des Speicherleitungs-Absperrventils (15, 15', 15") genau so groß ist wie der Druck P_{S} in der Speicherleitung (16).

19. Verfahren nach Anspruch 11 oder 18, **dadurch gekennzeichnet, daß** dann, wenn der Druck P_{S} in der Speicherleitung (16) niedriger ist als der Druck P_{Z} in der Zylinderleitung (11), in einem weiteren Verfahrensschritt der Motor (14) der Pumpe (13) wiederum betrieben wird und zwar so, daß die Pumpe (13) Hydrauliköl in Richtung zum Zylinderleitungs-Absperrventil (12, 12', 12") fördert und zwar genau so lange, bis der Druckes P_{12P} genau gleich groß ist wie der Druck P_{Z} in der Zylinderleitung (11).

20. Verfahren nach Anspruch 11 oder 18, **dadurch gekennzeichnet, daß** dann, wenn der Druck P_{S} in der Speicherleitung (16) höher ist als der Druck P_{Z} in der Zylinderleitung (11), in einem weiteren Verfahrensschritt der Motor (14) der Pumpe (13) wiederum betrieben wird und zwar so, daß die Pumpe (13) Hydrauliköl in Richtung zum Speicherleitungs-Absperrventil (15, 15', 15") fördert und zwar genau so lange, bis der Druckes P_{12P} genau gleich groß ist wie der Druck P_{Z} in der Zylinderleitung (11).

## Claims

1. Hydraulic elevator for moving a car (1), with a pressure accumulator (17), in which elevator the flow of hydraulic oil between a hydraulic drivé (2) and the pressure accumulator (17) through a cylinder line (11) and an accumulator line (16) can be produced by a pump (13), which can be driven by a motor (14), which is operated by a power regulating unit (24) on the basis of signals from a control/automatic regulation unit (25), and in which elevator the pressure accumulator (17) can be charged with hydraulic oil from a tank (21) by a charging pump (18) driven by an electric motor (19), which is controlled by a pressure switch (22), **characterized by** the fact
-- that the pump (13) is connected on one side directly to the cylinder line (11), which contains an electrically controllable cylinder line stop valve (12; 12'; 12"), which is an ON-OFF valve, and the cylinder line (11) is connected with the hydraulic drive (2),
-- that the pump (13) is connected on the other side directly to the accumulator line (16), which contains an electrically controllable accumulator line stop valve (15; 15'; 15"), which is also an ON-OFF valve, and the accumulator line (16) is connected with the pressure accumulator,
-- that a load pressure sensor (31) for detecting the pressure P_{Z} in the cylinder line (11) is installed in this line, and
-- that means (13, 14, 24, 25) are present, which, together with the pressure switch (22) and the load pressure sensor (31), can be operated in such a way that the pressure in the section of the line between the pump (13) and the cylinder line stop valve (12; 12'; 12") and in the section of the line between the pump (13) and the accumulator line stop valve (15; 15'; 15") can be varied by these means in such a way that, when the car (1) is at a standstill, the pressure differences at the accumulator line stop valve (15; 15'; 15") and at the cylinder line stop valve (12; 12'; 12") are largely eliminated before the cylinder line stop valve (12; 12'; 12") and the accumulator line stop valve (15; 15'; 15") are opened.

2. Hydraulic elevator in accordance with Claim 1, **characterized by** the fact that the cylinder line stop valve (12) is a double-stopping cylinder line stop valve (12').

3. Hydraulic elevator in accordance with Claim 1, **characterized by** the fact that the cylinder line stop valve (12) is a single-stopping cylinder line stop valve (12").

4. Hydraulic elevator in accordance with Claim 1, **characterized by** the fact that the cylinder line stop valve (12) is a single-stopping cylinder line stop valve (12"), which consists of an ON-OFF valve and a parallel-connected nonreturn valve (RV).

5. Hydraulic elevator in accordance with any of Claims 1 to 4, **characterized by** the fact that the accumulator line stop valve (15) is a double-stopping accumulator line stop valve (15').

6. Hydraulic elevator in accordance with any of Claims 1 to 4, **characterized by** the fact that the accumulator line stop valve ( 15) is a single-stopping accumulator line stop valve (15").

7. Hydraulic elevator in accordance with any of Claims 1 to 4, **characterized by** the fact that the accumulator line stop valve (15) is a single-stopping accumulator line stop valve (15"), which consists of an ON-OFF valve and a parallel-connected nonreturn valve (RV).

8. Hydraulic elevator in accordance with any of Claims 1 to 7, **characterized by** the fact that another pressure sensor (33) is installed in the section of the line between the cylinder line stop valve (12; 12'; 12") and the pump (13), which is used for measuring a pressure P_{12P} in this section of the line, and whose signal can be transmitted to the control/automatic regulation unit (25).

9. Hydraulic elevator in accordance with Claim 8, **characterized by** the fact that another pressure sensor (34) is installed in the section of the line between the accumulator line stop valve (15, 15', 15") and the pump (13), which is used for measuring a pressure P_{15P} in this section of the line, and whose signal can be transmitted to the control/automatic regulation unit (25).

10. Method of controlling and automatically regulating a hydraulic elevator for moving a car (1), with a pressure accumulator (17), in which elevator the flow of hydraulic oil between a hydraulic drive (2) and the pressure accumulator (17) through a cylinder line (11) and an accumulator line (16) can be produced by a pump (13), which can be driven by a motor (14), which is operated by a power regulating unit (24) on the basis of signals from a control/automatic regulation unit (25), and in which elevator the pressure accumulator (17) can be charged with hydraulic oil from a tank (21) by a charging pump ( 18) driven by an electric motor (19), which is controlled by a pressure switch (22), **characterized by** the fact that, before the start of upward or downward travel of the car (1),
-- in a first step of the method, the electric motor (14) of the pump (13) is controlled in such a way that it builds up a pressure at the pump-side connection of an accumulator line stop valve (15, 15', 15") that is approximately the same as the pressure P_{S} in the accumulator line (16),
-- that in a second step of the method, the accumulator line stop valve (15, 15', 15") is opened.
-- that in a third step of the method, the motor (14) remains magnetized, and
-- that a cylinder line stop valve (12; 12'; 12") is then opened.

11. Method in accordance with Claim 10, **characterized by** the fact that the electric motor (14) is operated during a first compensation time (t_{A1}).

12. Method in accordance with Claim 11, **characterized by** the fact that the first compensation time (t_{A1}) is about 100 to 300 ms long.

13. Method in accordance with Claim 11 or Claim 12, **characterized by** the fact that the electric motor (14) is operated at a reduced speed n_{red} during the first compensation time (t_{A1}).

14. Method in accordance with any of Claims 11 to 13, **characterized by** the fact that the motor (14) remains magnetized for the duration of a second compensation time (t_{A2}).

15. Method in accordance with Claim 14, **characterized by** the fact that the second compensation time (t_{A2}) is about 200 ms long.

16. Method in accordance with any of Claims 11 to 15, **characterized by** the fact that, after the accumulator line stop valve (15, 15', 15") has been opened and after the delayed opening of the cylinder line stop valve (12, 12', 12"), the travel of the car (1) for upward or downward travel is started by control or automatic regulation of the speed and direction of rotation of the motor (14) by means of the power regulating unit (24) only after the expiration of a third compensation time (t_{A3}).

17. Method in accordance with Claim 16, **characterized by** the fact that the third compensation time (t_{A3}) is a maximum of 300 ms long.

18. Method in accordance with Claim 11, **characterized by** the fact that the first compensation time (t_{A1}) does not have a predetermined length, but rather that its end is determined to have occurred when the pressure P_{15P} produced by the operation of the pump (13) at the pump-side connection of the accumulator line stop valve (15, 15', 15") is exactly the same as the pressure P_{S} in the accumulator line (16).

19. Method in accordance with Claim 11 or Claim 18, **characterized by** the fact that, when the pressure P_{S} in the accumulator line (16) is lower than the pressure P_{Z} in the cylinder line (11), then, in an additional step of the method, the motor (14) of the pump (13) is again operated in such a way that the pump (13) conveys hydraulic oil in the direction of the cylinder line stop valve (12, 12', 12") precisely until the pressure P_{12P} is exactly the same as the pressure P_{Z} in the cylinder line (11).

20. Method in accordance with Claim 11 or Claim 18, **characterized by** the fact that, when the pressure P_{S} in the accumulator line (16) is higher than the pressure P_{Z} in the cylinder line (11), then, in an additional step of the method, the motor (14) of the pump (13) is again operated in such a way that the pump (13) conveys hydraulic oil in the direction of the accumulator line stop valve (15, 15', 15") precisely until the pressure P_{12P} is exactly the same as the pressure P_{Z} in the cylinder line (11).

## Revendications

1. Ascenseur hydraulique pour mouvoir une cabine (1), comprenant un accumulateur de pression (17), dans lequel l'écoulement d'huile hydraulique entre un entraînement hydraulique (2), par une conduite de cylindre (11), et l'accumulateur de pression (17) par une conduite d'accumulateur (16) peut être généré au moyen d'une pompe (13) qui peut être entraînée par un moteur (14), qui est opéré par un vérin de puissance (24) à cause de signaux d'un dispositif de contrôle et de régulation (25), et dans lequel l'accumulateur de pression (17) peut être chargé d'huile hydraulique depuis un réservoir (21) au moyen d'une pompe de chargement (18) entraînée par un moteur électrique (19), commandée par un interrupteur à pression (22), **caractérisé en ce**
- **que** la pompe (13) est reliée, d'un côté, directement à la conduite de cylindre (11) contenant une soupape d'arrêt de conduite de cylindre (12; 12'; 12"), qui est une soupape OUVERT-FERME, avec l'entraînement (2) et, de l'autre côté,
- par l'intermédiaire d'une soupape d'arrêt de conduite d'accumulateur (15; 15'; 15") électriquement attaquable, qui est également une soupape OUVERT-FERME, et la conduite d'accumulateur (16), avec l'accumulateur de pression (17),
- **que**, sur la conduite de cylindre (11), un capteur de pression de charge (31) est disposé pour détecter la pression P_{z} dans cette conduite,
- et **que** des moyens prévus (13, 14, 24, 25) peuvent en outre, avec la collaboration de l'interrupteur à pression (22) et du capteur de pression de charge (31), être opérés de telle manière que, par leur action, la pression dans la section de conduite entre la pompe (13) et la soupape d'arrêt de conduite de cylindre (12; 12'; 12") et dans la section de conduite entre la pompe (13) et la soupape d'arrêt de conduite d'accumulateur (15; 15'; 15") peut être variée, pendant l'arrêt de la cabine (1), de telle manière que les différences en pression à la soupape d'arrêt de conduite d'accumulateur (15; 15'; 15") et à la soupape d'arrêt de conduite de cylindre (12; 12'; 12") sont largement réduites avant l'ouverture de la soupape d'arrêt de conduite de cylindre (12; 12'; 12") et de la soupape d'arrêt de conduite d'accumulateur (15; 15'; 15").

2. Ascenseur hydraulique selon la revendication 1, **caractérisé en ce que** la soupape d'arrêt de conduite de cylindre (12) est une soupape d'arrêt de conduite de cylindre (12') doublement bloquante.

3. Ascenseur hydraulique selon la revendication 1, **caractérisé en ce que** la soupape d'arrêt de conduite de cylindre (12) est une soupape d'arrêt de conduite de cylindre (12") simplement bloquante.

4. Ascenseur hydraulique selon la revendication 1, **caractérisé en ce que** la soupape d'arrêt de conduite de cylindre (12) est une soupape d'arrêt de conduite de cylindre (12") simplement bloquante qui est constituée par un clapet OUVERT-FERME et un clapet anti-retour (RV) monté en parallèle.

5. Ascenseur hydraulique selon l'une des revendications 1 à 4, **caractérisé en ce que** la soupape d'arrêt de conduite d'accumulateur (15) est une soupape d'arrêt de conduite d'accumulateur (15') doublement bloquante.

6. Ascenseur hydraulique selon l'une des revendications 1 à 4, **caractérisé en ce que** la soupape d'arrêt de conduite d'accumulateur (15) est une soupape d'arrêt de conduite d'accumulateur (15") simplement bloquante.

7. Ascenseur hydraulique selon l'une des revendications 1 à 4, **caractérisé en ce que** la soupape d'arrêt de conduite d'accumulateur (15) est une soupape d'arrêt de conduite d'accumulateur (15") simplement bloquante qui est constitué par un clapet OUVERT-FERME et un clapet anti-retour (RV) monté en parallèle.

8. Ascenseur hydraulique selon l'une des revendications 1 à 7, **caractérisé en ce que**, dans la section de conduite entre la soupape d'arrêt de conduite de cylindre (12, 12', 12") et la pompe (13), un autre capteur de pression (33) est disposé qui sert à détecter une pression P_{12P} dans cette section de conduite et dont le signal peut être transmis au dispositif de contrôle et de régulation.

9. Ascenseur hydraulique selon la revendication 8, **caractérisé en ce que**, dans la section de conduite entre la soupape d'arrêt de conduite d'accumulateur (15, 15', 15") et la pompe (13), un autre capteur de pression (34) est disposé qui sert à détecter une pression P_{15P} dans cette section de conduite et dont le signal peut être transmis au dispositif de contrôle et de régulation.

10. Méthode de contrôle et de régulation d'un ascenseur hydraulique pour mouvoir une cabine (1), comprenant un accumulateur de pression (17), dans lequel l'écoulement d'huile hydraulique entre un entraînement hydraulique (2), par une conduite de cylindre (11), et l'accumulateur de pression (17) par une conduite d'accumulateur (16) peut être généré au moyen d'une pompe (13) qui peut être entraînée par un moteur (14), qui est opéré par un vérin de puissance (24) à cause de signaux d'un dispositif de contrôle et de régulation (25), et dans lequel l'accumulateur de pression (17) peut être chargé d'huile hydraulique depuis un réservoir (21) au moyen d'une pompe de chargement (18) entraînée par un moteur électrique (19), commandée par un interrupteur à pression (22), **caractérisé en ce que,** avant le début d'une course ascendante ou descendante de la cabine (1),
- dans une première étape de la méthode, le moteur électrique (14) de la pompe (13) est attaqué de telle manière qu'il établit une pression au raccord du côté de la pompe d'une soupape d'arrêt de conduite d'accumulateur (15, 15', 15"), qui correspond approximativement à la pression P_{S} dans la conduite de pression (16), que
- dans une deuxième étape de la méthode, la soupape d'arrêt de conduite d'accumulateur (15, 15', 15") est ouverte, que
- dans une troisième étape de la méthode, le moteur (14) reste magnétisé, et que
- ensuite, une soupape d'arrêt de conduite de cylindre (12, 12', 12") est ouverte.

11. Méthode selon la revendication 10, **caractérisée en ce que** le moteur électrique (14) est opéré pendant un premier temps de compensation (t_{A1}).

12. Méthode selon la revendication 11, **caractérisée en ce que** le premier temps de compensation (t_{A1}) fait environ 100 à 300 msec.

13. Méthode selon la revendication 11 ou 12, **caractérisée en ce que** le moteur électrique (14) est opéré, pendant le premier temps (t_{A1}), avec une vitesse de rotation n_{red} réduite.

14. Méthode selon l'une des revendications 11 à 13, **caractérisée en ce que** le moteur (14) reste magnétisé pour une durée d'un deuxième temps de compensation (t_{A2}).

15. Méthode selon la revendication 14, **caractérisée en ce que** le deuxième temps de compensation (t_{A2}) fait environ 200 msec.

16. Méthode selon l'une des revendications 11 à 15, **caractérisée en ce que** l'on attend, après l'ouverture de la soupape d'arrêt de conduite d'accumulateur (15, 15', 15") et l'ouverture de la soupape d'arrêt de conduite de cylindre (12, 12, 12") retardée, l'écoulement d'un troisième temps de compensation (t_{A3}) avant que la course de la cabine (1) pour la course ascendante ou la course descendante soit commencée par l'intermédiaire du contrôle ou, respectivement, de la régulation de la vitesse de rotation et du sens de rotation du moteur (14) à l'aide du vérin de puissance (24).

17. Méthode selon la revendication 16, **caractérisée en ce que** le troisième temps de compensation (t_{A3}) fait 200 msec au maximum.

18. Méthode selon la revendication 11, **caractérisée en ce que** le premier temps de compensation (t_{A1}) n'a pas de durée prédéterminée, mais que sa fin est déterminée par le fait que la pression P_{15P}, qui se produit par la marche de la pompe (13) au raccord du côté de la soupape d'arrêt de conduite d'accumulateur (15, 15', 15"), soit précisément égale à la pression P_{S} dans la conduite d'accumulateur (16).

19. Méthode selon la revendication 11 ou 18, **caractérisée en ce que**, lorsque la pression P_{S} dans la conduite d'accumulateur (16) est plus faible que la pression P_{Z} dans la conduite de cylindre (11), le moteur (14) de la pompe (13) est opéré de nouveau dans une autre étape de la méthode, et cela de telle manière que la pompe (13) débite de l'huile hydraulique en direction de la soupape d'arrêt de conduite de cylindre (12, 12', 12"), et cela précisément aussi longtemps jusqu'à ce que la pression P_{12P} soit précisément égale à la pression P_{Z} dans la conduite de cylindre (11).

20. Méthode selon la revendication 11 ou 18, **caractérisée en ce que**, lorsque la pression P_{S} dans la conduite d'accumulateur (16) est plus importante que la pression P_{Z} dans la conduite de cylindre (11), le moteur (14) de la pompe (13) est opéré de nouveau dans une autre étape de la méthode, et cela de telle manière que la pompe (13) débite de l'huile hydraulique en direction de la soupape d'arrêt de conduite d'accumulateur (15, 15', 15"), et cela précisément aussi longtemps jusqu'à ce que la pression P_{12P} soit précisément égale à la pression P_{Z} dans la conduite de cylindre (11).
